(19) Europäisches Patentamt
European Patent Office
Office européen des brevets

(11) **EP 2 093 575 B1**

(12) **EUROPEAN PATENT SPECIFICATION**

(45) Date of publication and mention
of the grant of the patent:
**19.09.2018 Bulletin 2018/38**

(51) Int Cl.:
***G01P 5/16*** *(2006.01)*    ***G01P 5/165*** *(2006.01)*
***G01P 13/02*** *(2006.01)*

(21) Application number: **09152339.9**

(22) Date of filing: **07.02.2009**

(54) **Systems and methods for determining air data parameters**

Systeme und Verfahren zur Bestimmung von Luftdatenparametern

Procédés et systèmes pour déterminer des paramètres de données d'air

(84) Designated Contracting States:
**FR GB**

(30) Priority: **21.02.2008 US 30393 P**
**29.05.2008 US 129263**

(43) Date of publication of application:
**26.08.2009 Bulletin 2009/35**

(73) Proprietor: **Honeywell International Inc.**
**Morris Plains, NJ 07950 (US)**

(72) Inventor: **Elgersma, Michael Ray**
**Morristown, NJ 07962-2245 (US)**

(74) Representative: **Houghton, Mark Phillip et al**
**Patent Outsourcing Limited**
**1 King Street**
**Bakewell, Derbyshire DE45 1DZ (GB)**

(56) References cited:
**EP-A1- 1 255 118      US-A- 5 616 861**
**US-A1- 2006 225 496**

**Description**

**BACKGROUND OF THE INVENTION**

Aircraft, missiles, and other air vehicles, manned and unmanned, utilize at least some air data parameters for flight control of the vehicle. Examples of air data parameters include, for example, static pressure (atmospheric pressure), total pressure (atmospheric pressure plus additional pressure due to airflow over the vehicle), angle of attack (the vertical angle of air velocity vector) and angle of sideslip (horizontal angle of air velocity vector).

Various pitot probes, mechanical vanes, and other protrusive devices are known to be utilized in conjunction with conventional air data systems so that the total pressure, the static pressure, the angle of attack, and the angle of sideslip can be derived by the conventional air data system. Sets of flush-mounted pressure sensors are often used near the front and sides of the vehicle to measure four air data parameters: total pressure (pt), static pressure (ps), angle of attack, and angle of sideslip. Flush-mounted pressure sensors have a lower radar cross section than alternate devices that measure air data parameters.

Patent document number US5616861 describes an air data sensing system which utilizes a plurality of probes. Each probe has three pressure sensing ports, each assembled with a sensor package that minimizes the need for corrections due to temperature or other variations in ambient conditions. The system is mounted on an air vehicle using two or three sets of right and left pairs of probes. The probes of each set are vertically spaced from the probes of the other sets. The probes are made light weight and small. The probes provide triple redundancy and because of the orientation on the air vehicle provide pressure and angle information, including the angle of sideslip.

Patent document number EP1255118 describes a semi-flush air data sensing probe which is formed as an elongated bubble housing directly supported on an aircraft surface and having a generally longitudinally extending rounded outer edge surface with a rounded contoured leading end. The housing has top and bottom wall surfaces extending from the supporting surface to the rounded outer surface. The trailing end of the housing is smaller than the leading end and is contoured to provide for smooth airflow past the housing. A central longitudinally extending plane that bisects the housing and which is perpendicular to the supporting surface, forms a reference. A forwardly facing port is at the leading end and centered on the central plane, and a pair of angle of attack sensing ports are on the leading end and are symmetrically located on opposite sides of the longitudinally extending plane (31). A static pressure sensing port (56) also is provided on the housing (20) spaced downstream from the leading end (22).

Patent document number US2006/225496 describes a method of calculating a system level air data parameter for an aircraft, for example aircraft angle-of-attack (AOA) and/or angle-of-sideslip (AOS). The method includes measuring a plurality of local static pressures pi. Next, a plurality of non-dimensional pressure ratios are each generated as a function of one of the plurality of local static pressures pi, a predicted system static pressure Ps-predicted, and a predicted impact pressure qc predicted. Then, the system level air data parameter is calculated as a function of the generated plurality of non-dimensional pressure ratios. Air data systems having air data computers configured to implement the method are also disclosed. The air data systems can be Flush Air Data Systems (FADS), or other types of air data systems.

Conventional systems require at least five pressures sensed from five different ports to determine the angle of attack (AOA), the angle of sideslip (AOS), the total pressure ($p_t$), and the static pressure ($p_s$). Often, more than five pressures from more than five different ports are used. Accordingly, there is a need to more efficiently determine these air data parameters.

**SUMMARY OF THE INVENTION**

The present invention in its various aspects is as set out in the appended claims.

Embodiments determine at least one of an angle of attack (AOA), an angle of sideslip (AOS), a total pressure ($p_t$), and a static pressure ($p_s$) from information provided by four pressure sensors coupled to four ports on a surface of a vehicle. Each of the ports may be defined by at least a unit vector, wherein the unit vectors are oriented in different planes.

**BRIEF DESCRIPTION OF THE DRAWINGS**

Preferred and alternative embodiments are described in detail below with reference to the following drawings:

FIGURE 1 is a diagram of a surface of a vehicle with four ports operable to receive an air pressure.
FIGURE 2 is a diagram of a surface of a vehicle with six ports operable to receive an air pressure;
FIGURE 3 is a block diagram of an embodiment of a navigation system;
FIGURE 4 illustrates the unit vectors of FIGURE 1 at an origin; and
FIGURE 5 illustrates that differences of unit vector pairs do not lie in the same plane.

## DETAILED DESCRIPTION OF THE PREFERRED EMBODIMENT

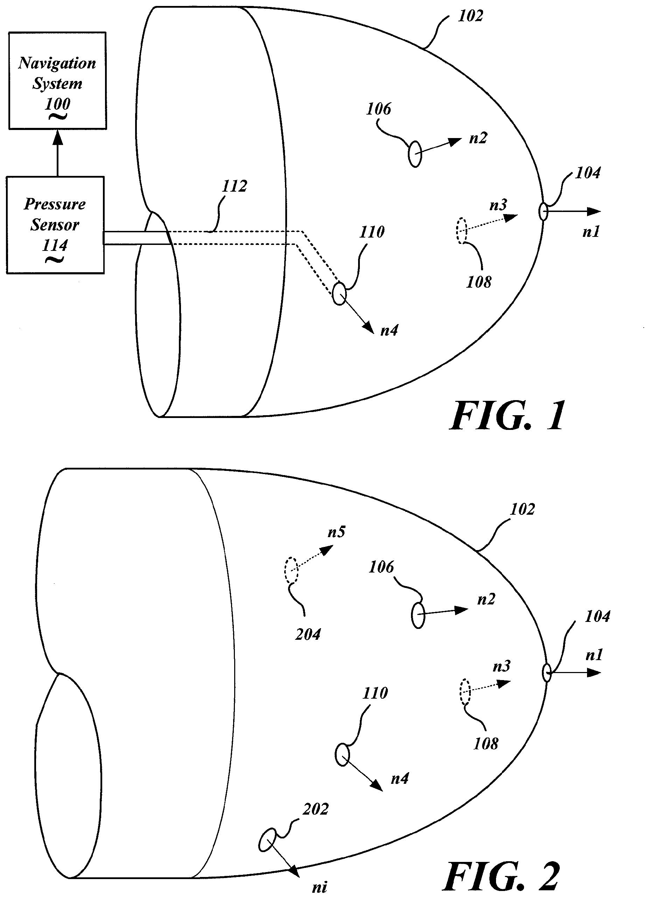

FIGURE 1 is a diagram of a surface 102 of a vehicle, or a portion thereof, with four ports 104, 106, 108, and 110 operable to receive an air pressure used to calculate air parameters by embodiments of the navigation system 100. An angle of attack (AOA), an angle of sideslip (AOS), a total pressure ($p_t$), and a static pressure ($p_s$) are determinable from information provided by the four pressure sensors coupled to the four ports 104, 106, 108, and 110 on a surface 102 of a vehicle.

Each port 104, 106, 108, and 110 is fluidly coupled to a respective pressure sensor via a duct. For example, the port 110 is fluidly coupled to the pressure sensor 114 via duct 112. (Other ducts and pressure sensors are not illustrated for brevity.)

In one embodiment, one port 104 is located at the leading end of the surface 102. However, in other embodiments, the port 104 may be located elsewhere on the surface 102. The surface 102 may be the nose, tip, leading end or the like of the vehicle or of a special sensor device that protrudes from the vehicle. The specific locations of the four ports 104, 106, 108, and 110 is not critical, Preferably, the ports 104, 106, 108, and 110 are located anywhere near the front of the vehicle. All four ports 104, 106, 108, and 110 could even be located at the exact same place. However, the directions that the sensors are pointed in, is important. If a direction that a pressure port i is pointed in is represented by a unit vector $n_i$, then the difference of unit vectors, $n_i - n_j$, for all pairs of ports i and j, need to lie in a different plane.

Unit-length vectors ($n_i$) associated with each port are also illustrated. The unit-length vectors conceptually illustrate a vector direction in which the port is pointed, which is normal to the area of the surface 102 at the location of the port. For example, the unit-length vector "$n_1$" corresponds to the direction in which port 104 is pointed, and is extending directly outward normal from the surface 102 of the nose, tip, leading end or the like of the vehicle or protruding sensor device.

FIGURE 2 is a diagram of a surface 102 of the vehicle with six ports 104, 106, 108, 110, 202, and 204 operable to receive air so that pressure at or near the port may be sensed. The two optional supplemental ports 202, 204 may be used to provide fault tolerance in the event of a failure of one or two of the ports 104, 106, 108, and 110. Two or more supplemental ports may be used by alternative embodiments. The process of using pressures sensed by the supplemental ports 202, 204 for fault tolerance purposes is described in greater detail below.

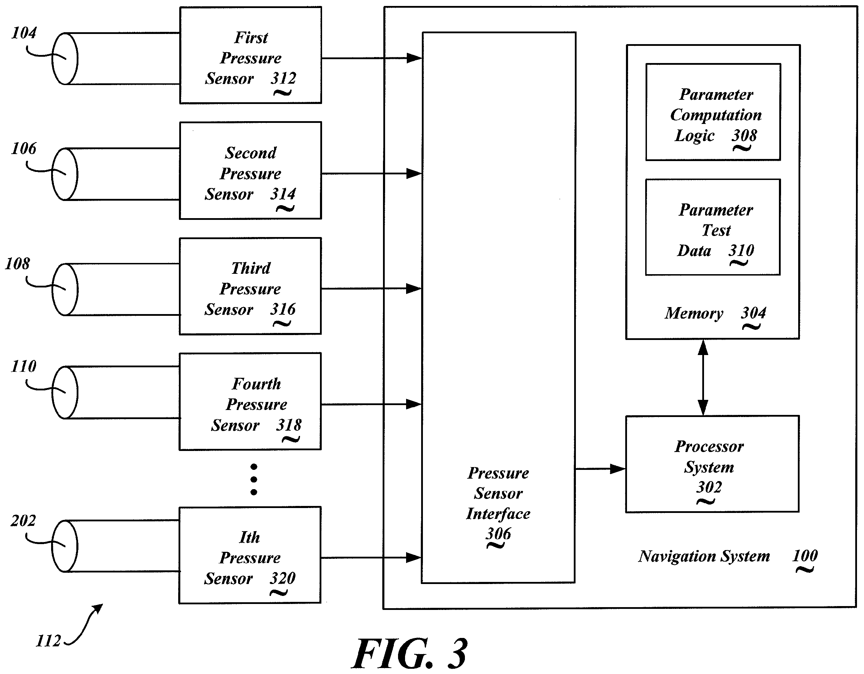

FIGURE 3 is a block diagram of an embodiment of the navigation system 100. The navigation system 100 has a processor system 302, a memory 304, and a pressure sensor interface 306. The memory 304 includes portions for the parameter computation logic 308 and the parameter test data 310.

A pressure sensor interface 306 is communicatively coupled to the four pressure sensors 312, 314, 316, and 318 which are fluidly coupled to the ports 104, 106, 108, and 110, respectively. If other ports are used, their respective pressure sensors also are communicatively coupled to the pressure sensor interface 306. The pressure sensor interface 306 converts signals from the pressure sensors sensors 312, 314, 316, and 318 into pressure information that may be processed by the processor system 302.

The pressure at a port is equal to atmospheric pressure plus the component of additional pressure due to air flowing over the vehicle at the location of the port. This additional pressure component is proportional to a function of the angle between the wind velocity vector and the unit vector of the port which is normal to the surface. The processor system 302 is operable to compute the parameters using as few as four pressure sensors sensors 312, 314, 316, and 318 mounted in arbitrary locations on the front surface 202 of a vehicle.

Below follows the equations that are derived for the case where the sensors 312, 314, 316, and 318 are sensing an undisturbed flow on the surface 202. For example, an undisturbed flow may occur at or near the tip of a nose of a vehicle travelling at supersonic speed.

The total pressure ($p_t$), the static pressure ($p_s$), the angle of attack (AOA), and the angle of sideslip (AOS), are parameters to be calculated by the processor system 302, which receives information corresponding to the sensed pressures at the ports: *p1, p2, p3, p4,...*

Let *v* be the vehicle's velocity vector in body coordinates. Let *m* be the number of pressure ports on the vehicle's surface, with a port *i* having a pressure $p_i$ and arbitrary surface unit-normal vector $n_i$. Let $n_i'$ be the transpose of the $n_i$ vector. The cosine of the angle between the velocity vector and the normal vector at the surface is given by $n_i' * v / \|v\|$. The pressure measured at the port i is then given by equation (1):

$$p_i = p_s + (p_t - p_s) * n_i' * v / \|v\| \qquad\qquad i = 1 \text{ to } m$$

The processor system 302 uses m $\geq$ 4 pressure-measurement equations to compute air data parameters [$p_s$, $p_t$, $v/\|v\|$] which can also be expressed in terms of [$p_s$, $p_t$, AOA, AOS] since putting unit vector, $v/\|v\|$, into spherical coordinates gives angles AOA and AOS. This measurement equation is exact only for an undisturbed flow of a fluid, such as air, over surface 202 (e.g., at the tip of an aircraft or missile nose-cone) that occurs, for example, in a supersonic flow over the surface as the vehicle is travelling at supersonic speeds. Let $w_i$ be the augmented normal vector, shown below in equation (2).

$$w_i = \begin{bmatrix} 1 \\ n_i \end{bmatrix} \in R^4 \qquad \text{Eq(2)}$$

Let u be the unknown vector, shown below in equation (3).

$$u = \begin{bmatrix} p_s \\ (p_t - p_s)\dfrac{v}{\|v\|} \end{bmatrix} \in R^4 \qquad \text{Eq(3)}$$

Here, the term "$\|v\|$" is the length of the vector v. The term "$R^4$" indicates that $u$ is a vector with four rows.
Let the transformation between angles (AOA, AOS) and the unit vector v/$\|v\|$ be defined by equation (4) below:

$$\begin{bmatrix} \cos(AOA) * \cos(AOS) \\ \sin(AOS) \\ \sin(AOA) * \cos(AOS) \end{bmatrix} = \dfrac{v}{\|v\|} \in R^3 \qquad \text{Eq(4)}$$

Here, the terms cos(AOA), cos(AOS), sin(AOA), and sin(AOS) form the components of the unit vector v/$\|v\|$ expressed in polar coordinates.
Then the $m$ pressure equations from equation (1) can be written as shown in equation (5) below.

$$p_i = w_i{}' * u \qquad i = 1 \text{ to m} \qquad \text{Eq(5)}$$

Here, $w_i'$ corresponds to a vector transposition of vector $w_i$.
Multiplying the above equation by vector $w_i$ and summing over i gives:

$$\left[ \sum_{i=1}^{m} w_i * p_i \right] = \left[ \sum_{i=1}^{m} w_i * w_i{}' \right] * u \qquad \text{Eq(6)}$$

The constant 4 x 4 matrix:

$$\left[ \sum_{i=1}^{m} w_i * w_i{}' \right]$$

is invertible for m $\geq$ 4 pressure ports if and only if all differences of unit vectors, $n_i$-$n_j$, do not lie in the same plane (see below for a demonstrating proof). Solving this system of four linear equations for unknown vector u is shown in equation (7) below.

$$u = \left[ \sum_{i=1}^{m} w_i * w_i' \right]^{-1} * \left[ \sum_{i=1}^{m} w_i * p_i \right] \qquad \text{Eq(7)}$$

Then the values of [ps,pt,v/‖v‖] can be extracted from the vector u. The top row of equation (3) gives:

$$p_s = u(1) \qquad \text{Eq(8)}$$

The bottom three rows of equation (3) give:

$$p_t - p_s = \begin{Vmatrix} u(2) \\ u(3) \\ u(4) \end{Vmatrix} \quad \text{so} \quad p_t = \begin{Vmatrix} u(2) \\ u(3) \\ u(4) \end{Vmatrix} + p_s \qquad \text{Eq(9)}$$

A velocity unit vector $v_{unit} = v/\|v\|$ is then defined. Using the values for $p_t$ - $p_s$ from equation (9) in the bottom three rows of equation (3) gives:

$$v_{unit} = v/\|v\| = \begin{bmatrix} u(2) \\ u(3) \\ u(4) \end{bmatrix} /(p_t - p_s) \qquad \text{Eq(10)}$$

Using the middle value of $v_{unit} = v/\|v\|$ from equation (10), in equation (4), and taking inverse sine (asine) gives equation (11) below.

$$\text{AOS} = \text{asin}(v_{unit}(2)) \qquad \text{Eq(11)}$$

Using the ratio of the third and first value of $v_{unit} = v/\|v\|$ from equation (10), in equation (4), and taking inverse tangent gives equation (12) below.

$$\text{AOA} = \text{atan2}(v_{unit}(3), v_{unit}(1)) \qquad \text{Eq(12)}$$

More general equations apply to both subsonic and supersonic flight. For the more general case where the pressure ports 104, 106, 108, and 110 are in a disturbed flow of fluid over the surface 102 (such as at supersonic speeds), the above equations are not exact. Accordingly, the equations are modified using experimental data. The experimental data may be empirical test data or computed data based on models or the like.

Let a pressure vector, P, contain pressures from all m ports, as shown by equation (13) below.

$$P = \begin{bmatrix} p_1 \\ p_2 \\ \vdots \\ p_m \end{bmatrix}$$

$$\text{Eq(13)}$$

Let $4 \times m$ augmented unit normal matrix, W, contain all augmented normal vectors, $w_i$, as shown in equation (14).

$$\text{W} = [w_1 \; w_2 \; \cdots \; w_m] \in R^{4 \times m} \qquad \text{Eq(14)}$$

Let $4 \times m$ undisturbed flow matrix, $A_{undisturbed\_flow}$, be defined by equation (15).

$$A_{undisturbed\_flow} = (W^*W')^{-1} * W \in R^{4 \times m} \qquad \text{Eq(15)}$$

Then, for pressure sensors in undisturbed flow, equation (7),

$$u = \left[ \sum_{i=1}^{m} w_i * w_i' \right]^{-1} * \left[ \sum_{i=1}^{m} w_i * p_i \right]$$

can be written using the constant matrix $A_{undisturbed\_flow}$ as shown in equation (16) below.

$$u = A_{undisturbed\_flow} * P \qquad \text{Eq(16)}$$

For pressure sensors in disturbed flow, which occurs for most vehicle shapes at supersonic speeds, and all vehicle shapes at speeds that are not supersonic, the following more general form of the equations for computing AOA, AOS, $p_t$, and $p_s$ applies. The general flow matrix, A, is a function of AOA, AOS and M = (vehicle speed)/(speed of sound), as shown in equation (17).

$$u = A(AOA, AOS, M) * P \qquad \text{Eq(17)}$$

The $4 \times m$ matrix function $A(AOA, AOS, M)$ is determined by least-squares fit to experimental data. First the parameter space, (AOA, AOS, M) is divided into many sub-regions, then in each sub-region a least-squares fit is done to find the best constant A matrix for that sub-region. For example, the least squares fit can be done at the 13*13*11=1859 regions centered at:

AOA$_{(i)}$ in the set [-30, -25, -20, -15, -10, -5, 0, 5, 10, 15, 20, 25, 30] degrees i = 1 to 13
AOS$_{(j)}$ in the set [-30, -25, -20, -15, -10, -5, 0, 5, 10, 15, 20, 25, 30] degrees, j = 1 to 13
M$_{(k)}$ in the set [0.1, 0.6, 0.7, 0.8, 0.9, 1.0, 1.1, 1.2, 1.3, 1.4, 2.0] k = 1 to 11.

For M$_{(k)}$>1, the smaller AOA and AOS values of [-5, 0, 5] degrees may be used.
The resulting 1859 A(AOA(i), AOS(j), M(k)) matrix values are stored in the parameter test data 310 portion of memory 304.
A single composite matrix, $A_{nominal}$, is fit to the entire region for a crude initial computation, as shown in equation (17).

$$u_{crude} = A_{no\,min\,al} * P \qquad\qquad Eq(18)$$

Using the crude value of $u$ from equation (18), equations (8), (9), (10), (11), and (12) give crude initial estimates for AOA, AOS and M, where M is a function of $(p_t\text{-}p_s)$ and air temperature. These crude estimates of AOA, AOS and M are then used to determine which stored A(AOA(i), AOS(j), M(k)) matrix to use to compute a more accurate value of u using equation (19) below.

$$u_{accurate} = A(AOA(i),\ AOS(j),\ M(k)) * P \qquad\qquad Eq(19)$$

Using the accurate value of $u$ from equation (19) in equations (8), (9), (10), (11), and (12) gives accurate values for AOA, AOS, $p_t$, and $p_s$.

As noted above, the values of AOA, AOS, $p_t$, and $p_s$ are determinable from pressures received from the four ports 104, 106, 108, and 110. However, if one of the ports 104, 106, 108, and 110 becomes inoperable, such as clogging by foreign matter or a failure in the pressure sensor electronics, then the AOA, AOS, $p_t$, and $p_s$ are no longer determinable.

Accordingly, one or more supplemental or extra ports are provided, such as the exemplary ports 202, 204. For example, if at least six pressure ports 104, 106, 108, 110, 202, and 204 are available, and in view that pressure information from only four ports is required, the processor system 302 can compute solutions using all fifteen combinations of the six ports 104, 106, 108, 110, 202, and 204 taken four at a time. That is, the processor system 302 computes fifteen sets of AOA, AOS, $p_t$, and $p_s$ based on the fifteen sets of ports.

Accordingly, with a single inoperable port and/or sensor, five of the fifteen computed sets of AOA, AOS, $p_t$, and $p_s$ will be accurate. Those five accurate solutions will agree with each other. That is, the five agreeing sets of AOA, AOS, $p_t$, and $p_s$ are then known to be accurate.

If $n$ supplemental ports and sensors are used, andiports and/or sensors are inoperable, then for all good combinations of $(4 + n\text{-} i)$ good sensors, taken 4 at a time, the computed sets of AOA, AOS, $p_t$, and $p_s$ will be accurate. Preferably, there will be two or more supplemental sensors. When there is only one supplemental sensor, $n$=1, and one sensor becomes inoperable, there is only one combination of four good sensors remaining that provides accurate values for AOA, AOS, $p_t$, and $p_s$. Since there are no other sets of operable sensors to compare to, AOA, AOS, $p_t$, and $p_s$, it will not have sufficient information to determine which set of four sensors is operational. That is, there is no independent way of knowing which set of four sensors is correct (since there is only one set). Therefore, at least two supplemental sensors are required in order to determine the correct answer when one sensor fails.

Furthermore, by noting which sets of AOA, AOS, $p_t$, and $p_s$ are inaccurate (do not agree with the five accurate sets of AOA, AOS, $p_t$, and $p_s$) the port and/or sensor that is not included in the set of five accurate solutions can be identified. Thus, a fault tolerant system for determining AOA, AOS, $p_t$, and $p_s$ is available in embodiments of the navigation system 100 that includes at least six ports and sensors.

As noted above, the constant 4 x 4 matrix

$$\left[\sum_{i=1}^{m} w_i * w_i'\right]$$

is invertible for $m \geq 4$ pressure ports if and only if all differences of unit vectors, $n_i\text{-}n_j$, do not lie in the same plane. Below follows a demonstrating proof.

The following theorem is tested by the proof below:
The 4 x 4 matrix

$$\left[\sum_{i=1}^{m} w_i * w_i'\right]$$

is invertible (rank = 4) if and only if $m \geq 4$ and all differences of unit normals, $n_i\text{-}n_j$, do not lie in the same plane in $R^3$. The proof of the above theorem is as follows. Define $4{\times}m$ matrix in accordance with equation (20) below.

$$W = \begin{bmatrix} w_1 & w_2 & \ldots & w_m \end{bmatrix} = \begin{bmatrix} 1 & 1 & 1 & \ldots & 1 \\ n_1 & n_2 & n_3 & \ldots & n_m \end{bmatrix} \qquad Eq(20)$$

Then define a $m \times 4$ matrix $W'=transpose(W)$. Then,

$$\left[ \sum_{i=1}^{m} w_i * w_i' \right] = W * W'$$

is invertible if and only if $rank(W) = 4$.

Next, let $I_3$ be a $3 \times 3$ identity matrix, so that $4 \times 4$ matrix

$$\begin{bmatrix} 1 & [0,0,0] \\ -n_j & I_3 \end{bmatrix}$$

is full rank. Equation (21) below then defines $rank(W)$.

$$rank(W) = rank\left( \begin{bmatrix} 1 & [0,0,0] \\ -n_j & I_3 \end{bmatrix} * W \right) = rank\left( \begin{bmatrix} 1 & [0,0,0] \\ -n_j & I_3 \end{bmatrix} * \begin{bmatrix} 1 & 1 & 1 & \ldots & 1 \\ n_1 & n_2 & n_3 & \ldots & n_m \end{bmatrix} \right)$$

$$= rank\left( \begin{bmatrix} 1 & \cdots & 1 & 1 & 1 & \cdots & 1 \\ n_1 - n_j & \cdots & n_{j-1} - n_j & 0 & n_{j+1} - n_j & \cdots & n_m - n_j \end{bmatrix} \right)$$

$$= 1 + rank\left( \begin{bmatrix} n_1 - n_j & n_2 - n_j & \ldots & n_m - n_j \end{bmatrix} \right)$$

$$= 1 + 3 \quad \text{if and only if } m \geq 4 \text{ and all } n_i - n_j \text{ do not lie in the same plane in}$$

$$R^3 \quad 1 \leq i \leq m \quad 1 \leq j \leq m.$$

(Eq21)

An example demonstrating a process for receiving air pressure information and calculating air parameters by an exemplary embodiment of the navigation system 100 is now provided. Assume a vehicle whose nose surface is a cone. Its conical surface is defined with angle $\xi$ from the symmetry axis of the cone to the surface of the cone (e.g.; $\sin(\xi) \approx 1/M_{max}$ for typical hypersonic vehicles with max Mach number $M_{max}$). Also assume that the surface has four pressure ports, $p1 = p_{front}$ at the point of the cone (in the x direction), and three more $p_2 = p_{right}$, $p_3 = p_{bottom}$, $p_4 = p_{left}$, distributed around a circle further back on the cone. The four normal vectors, $n_i$, i=1,2,3,4 will be:

$$\begin{bmatrix} n_1 & n_2 & n_3 & n_4 \end{bmatrix} = \begin{bmatrix} 1 & \sin(\xi) & \sin(\xi) & \sin(\xi) \\ 0 & \cos(\xi) & 0 & -\cos(\xi) \\ 0 & 0 & \cos(\xi) & 0 \end{bmatrix}.$$

Eq(22)

Using Equation (22) then gives:

$$\begin{bmatrix} w_1 & w_2 & w_3 & w_4 \end{bmatrix} = \begin{bmatrix} 1 & 1 & 1 & 1 \\ 1 & \sin(\xi) & \sin(\xi) & \sin(\xi) \\ 0 & \cos(\xi) & 0 & -\cos(\xi) \\ 0 & 0 & \cos(\xi) & 0 \end{bmatrix}.$$

Eq(23)

Applying equation (23) to the four pressure ports ($m = 4$) gives:

$$u = \left[ \sum_{i=1}^{4} w_i * w_i' \right]^{-1} * \left[ \sum_{i=1}^{4} w_i * p_i \right]$$

$$= \begin{bmatrix} \dfrac{-\sin(\xi)}{[1-\sin(\xi)]} & \dfrac{1}{2*[1-\sin(\xi)]} & 0 & \dfrac{1}{2*[1-\sin(\xi)]} \\ \dfrac{1}{[1-\sin(\xi)]} & \dfrac{-1}{2*[1-\sin(\xi)]} & 0 & \dfrac{-1}{2*[1-\sin(\xi)]} \\ 0 & \dfrac{1}{2*\cos(\xi)} & 0 & \dfrac{-1}{2*\cos(\xi)} \\ 0 & \dfrac{-1}{2*\cos(\xi)} & \dfrac{1}{\cos(\xi)} & \dfrac{-1}{2*\cos(\xi)} \end{bmatrix} * \begin{bmatrix} p_{front} \\ p_{right} \\ p_{bottom} \\ p_{left} \end{bmatrix}.$$

Eq(24)

Using equations (2) and (4) for the definition of elements of $u$, in equation (24) then gives equations (25)-(28) for $p_s$, $p_t$, AOA and AOS:

$$p_s = [-p_{front} * \sin(\xi) + (p_{right} + p_{left})/2]/(1-\sin(\xi)),$$

Eq(25)

$$(p_t - p_s) * \cos(AOA) * \cos(AOS) = [p_{front} - (p_{right} + p_{left})/2]/(1-\sin(\xi)),$$

Eq(26)

$$(p_t - p_s) * \sin(AOS) = (p_{right} - p_{left})/(2*\cos(\xi)), \text{ and}$$

Eq(27)

$$(p_t - p_s) * \sin(AOA) * \cos(AOS) = [p_{bottom} - (p_{right} + p_{left})/2]/\cos(\xi).$$

$$Eq(28)$$

Taking the norm of the vector formed by the three equations (26)-(28) gives ($p_t$-$p_s$), which combined with equation (25) for $p_s$ gives total pressure $p_t$:

$$p_t = \left\| \begin{array}{c} [p_{front} - (p_{right} + p_{left})/2]/(1 - \sin(\xi)) \\ (p_{right} - p_{left})/(2 * \cos(\xi)) \\ [p_{bottom} - (p_{right} + p_{left})/2]/\cos(\xi) \end{array} \right\| - p_s.$$

$$Eq(29)$$

Equation (27) then gives AOS:

$$\sin(AOS) = [(p_{right} - p_{left})/(2 * \cos(\xi) * (p_t - p_s))].$$

$$Eq(30)$$

Dividing equation (28) by equation (26) gives AOA:

$$\tan(AOA) = [[p_{bottom} - (p_{right} + p_{left})/2]/[p_{front} - (p_{right} + p_{left})/2]] * [(1 - \sin(\xi))/\cos(\xi)]$$

$$Eq(31)$$

Solution of the above equations enables determination of the above identified air parameters.

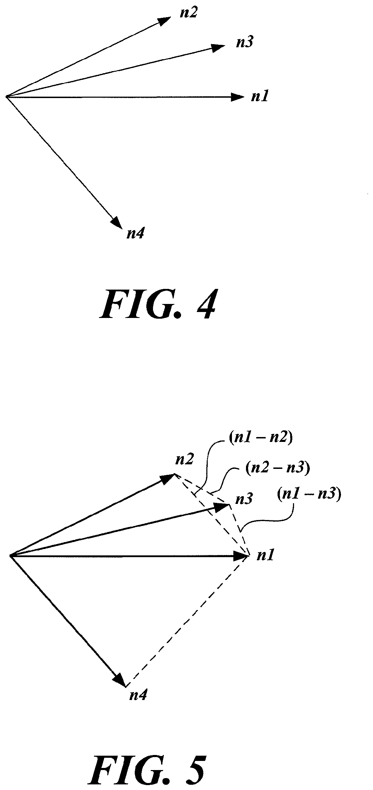

FIGURE 4 illustrates the unit vectors of FIGURE 1 at an origin. FIGURE 5 illustrates that differences of unit vector pairs do not lie in the same plane. For the four unit vectors n1, n2, n3, and n4, the set of ni-nj vectors do not all lie in the same plane. That is, each of the unit vector pairs define a unit vector difference ($n_i$-$n_j$). In the various embodiments, at least one of the vector pair differences lies in a different plane than the other unit vector pair differences. The embodiments of the invention in which an exclusive property or privilege is claimed are defined as follows:

$$\begin{bmatrix} w_1 & w_2 & w_3 & w_4 \end{bmatrix} = \begin{bmatrix} 1 & 1 & 1 & 1 \\ 1 & \sin(\xi) & \sin(\xi) & \sin(\xi) \\ 0 & \cos(\xi) & 0 & -\cos(\xi) \\ 0 & 0 & \cos(\xi) & 0 \end{bmatrix}.$$

$$Eq(23)$$

Applying equation (23) to the four pressure ports ($m = 4$) gives:

$$u = \left[ \sum_{i=1}^{4} w_i * w_i' \right]^{-1} * \left[ \sum_{i=1}^{4} w_i * p_i \right]$$

$$= \begin{bmatrix} \dfrac{-\sin(\xi)}{[1-\sin(\xi)]} & \dfrac{1}{2*[1-\sin(\xi)]} & 0 & \dfrac{1}{2*[1-\sin(\xi)]} \\[2ex] \dfrac{1}{[1-\sin(\xi)]} & \dfrac{-1}{2*[1-\sin(\xi)]} & 0 & \dfrac{-1}{2*[1-\sin(\xi)]} \\[2ex] 0 & \dfrac{1}{2*\cos(\xi)} & 0 & \dfrac{-1}{2*\cos(\xi)} \\[2ex] 0 & \dfrac{-1}{2*\cos(\xi)} & \dfrac{1}{\cos(\xi)} & \dfrac{-1}{2*\cos(\xi)} \end{bmatrix} * \begin{bmatrix} p_{front} \\ p_{right} \\ p_{bottom} \\ p_{left} \end{bmatrix} .$$

$$Eq(24)$$

Using equations (2) and (4) for the definition of elements of u, in equation (24) then gives equations (25)-(28) for $p_s$, $p_t$, AOA and AOS:

$$p_s = [-p_{front} * \sin(\xi) + (p_{right} + p_{left})/2]/(1 - \sin(\xi)) ,$$

$$Eq(25)$$

$$(p_t - p_s) * \cos(AOA) * \cos(AOS) = [p_{front} - (p_{right} + p_{left})/2]/(1 - \sin(\xi)) ,$$

$$Eq(26)$$

$$(p_t - p_s) * \sin(AOS) = (p_{right} - p_{left})/(2 * \cos(\xi)) , \text{ and}$$

$$Eq(27)$$

$$(p_t - p_s) * \sin(AOA) * \cos(AOS) = [p_{bottom} - (p_{right} + p_{left})/2]/\cos(\xi) .$$

$$Eq(28)$$

Taking the norm of the vector formed by the three equations (26)-(28) gives ($p_t$ - $p_s$), which combined with equation (25) for $p_s$ gives total pressure $p_t$:

$$p_t = \left\| \begin{matrix} [p_{front} - (p_{right} + p_{left})/2]/(1 - \sin(\xi)) \\ (p_{right} - p_{left})/(2 * \cos(\xi)) \\ [p_{bottom} - (p_{right} + p_{left})/2]/\cos(\xi) \end{matrix} \right\| - p_s .$$

$$Eq(29)$$

Equation (27) then gives AOS:

$$\sin(AOS) = [(p_{right} - p_{left})/(2 * \cos(\xi) * (p_t - p_s))] .$$

$$Eq(30)$$

Dividing equation (28) by equation (26) gives AOA:

$$\tan(AOA) = [[p_{bottom} - (p_{right} + p_{left})/2]/[p_{front} - (p_{right} + p_{left})/2]] * [(1 - \sin(\xi))/\cos(\xi)]$$

Eq(31)

Solution of the above equations enables determination of the above identified air parameters.

FIGURE 4 illustrates the unit vectors of FIGURE 1 at an origin. FIGURE 5 illustrates that differences of unit vector pairs do not lie in the same plane. For the four unit vectors n1, n2, n3, and n4, the set of n$i$-n$j$ vectors do not all lie in the same plane. That is, each of the unit vector pairs define a unit vector difference (n$i$-n$j$). In the various embodiments, at least one of the vector pair differences lies in a different plane than the other unit vector pair differences.

**Claims**

1. A method that determines air data parameters for a vehicle, comprising:

    receiving a first air pressure from a first port (104) located on a surface of the vehicle;
    receiving a second air pressure from a second port (106) located on the surface of the vehicle;
    receiving a third air pressure from a third port (108) located on the surface of the vehicle;
    receiving a fourth air pressure from a fourth port (110) located on the surface of the vehicle;
    receiving a fifth air pressure from a fifth port (202) located on the surface of the vehicle;
    receiving a sixth air pressure from a sixth port (204) located on the surface of the vehicle;
    identifying a plurality of groupings of four different air pressures from the first, second, third, fourth, fifth and sixth air pressures;
    determining at least one of a total pressure, $p_t$, a static pressure, $p_s$, an angle of attack, AOA, and an angle of sideslip, AOS for each of the identified groupings of four different air pressures;
    comparing the at least one of the determined $p_t$, the $p_s$, the AOA, and the AOS for each of the identified groupings of four different air pressures;
    identifying the groupings of four different air pressures that have the same at least one of the determined $p_t$, $p_s$, AOA, and AOS; and
    determining at least one of an actual $p_t$, an actual $p_s$, an actual AOA, and an actual AOS based upon the at least one determined $p_t$, $p_s$, AOA, and AOS for each of the identified groupings of four different air pressures that have the same at least one of the $p_t$, $p_s$, AOA, and AOS;
    wherein each of the ports is defined by at least a unit vector, wherein each pair of the unit vectors defines a difference, and wherein each of the vector pair differences lies in a different plane than the other vector pair differences.

2. The method of Claim 1, further comprising:

    identifying the groupings of four different air pressures that have at least one different $p_t$, $p_s$, AOA, and AOS;
    identifying at least one port commonly associated with the groupings of four different air pressures that have the at least one different $p_t$, $p_s$, AOA, and AOS; and
    determining that the identified at least one port is inoperable.

3. The method of Claim 1, wherein the first, the second, the third and the fourth pressures are received while the vehicle is moving at a supersonic speed.

4. A system for determining air data parameters for a vehicle, comprising:

    a first sensor (312) coupled to a first port (104) located on a surface of the vehicle, and operable to sense a first air pressure;
    a second sensor (314) coupled to a second port (106) located on the surface of the vehicle, and operable to sense a second air pressure;
    a third sensor (316) coupled to a third port (108) located on the surface of the vehicle, and operable to sense a third air pressure;
    a fourth sensor (318) coupled to a fourth port (110) located on the surface of the vehicle, and operable to sense a fourth air pressure;

a fifth sensor coupled to a fifth port (202) located on the surface of the vehicle, and operable to sense a fifth air pressure;

a sixth sensor coupled to a sixth port (204) located on the surface of the vehicle, and operable to sense a sixth air pressure; and

a processor system (302) operable to:

identify a plurality of groupings of four different air pressures from the first, second, third, fourth, fifth and sixth air pressures;

determine at least one of a total pressure, $p_t$, a static pressure, $p_s$, an angle of attack, AOA, and an angle of sideslip, AOS for each of the identified groupings of four different air pressures

compare at least one of the determined $p_t$, the $p_s$, the AOA, and the AOS for each of the identified groupings of four different air pressures;

identify the groupings of four different air pressures that have the same at least one of the determined $p_t$, $p_s$, AOA, and AOS; and

determine at least one of an actual $p_t$, an actual $p_s$, an actual AOA, and an actual AOS from the determined $p_t$, $p_s$, AOA, and AOS for each of the identified groupings of four different air pressures that have the same at least one of $p_t$, $p_s$, AOA, and AOS

wherein each of the ports is defined by at least a unit vector, wherein each pair of the unit vectors defines a difference, and wherein each of the vector pair differences lies in a different plane than the other vector pair differences.

5. The system of Claim 4, wherein the processor system is operable to:

compare at least one of the determined $p_t$, the $p_s$, the AOA, and the AOS for each of the identified groupings of four different air pressures;

identify the groupings of four different air pressures that have at least one different $p_t$, $p_s$, AOA, and AOS;

identify at least one port commonly associated with the groupings of four different air pressures that have the at least one different $p_t$, $p_s$, AOA, and AOS; and

determine that the identified at least one port is inoperable.

**Patentansprüche**

1. Verfahren, das Luftdatenparameter für ein Fahrzeug bestimmt, umfassend:

Empfangen eines ersten Luftdrucks von einer ersten Öffnung (104), die an einer Oberfläche des Fahrzeugs angeordnet ist;

Empfangen eines zweiten Luftdrucks von einer zweiten Öffnung (106), die an der Oberfläche des Fahrzeugs angeordnet ist;

Empfangen eines dritten Luftdrucks von einer dritten Öffnung (108), die an der Oberfläche des Fahrzeugs angeordnet ist;

Empfangen eines vierten Luftdrucks von einer vierten Öffnung (110), die an der Oberfläche des Fahrzeugs angeordnet ist;

Empfangen eines fünften Luftdrucks von einer fünften Öffnung (202), die an der Oberfläche des Fahrzeugs angeordnet ist;

Empfangen eines sechsten Luftdrucks von einer sechsten Öffnung (204), die an der Oberfläche des Fahrzeugs angeordnet ist;

Identifizieren einer Vielzahl von Gruppierungen von vier verschiedenen Luftdrücken von dem ersten, zweiten, dritten, vierten, fünften und sechsten Luftdruck;

Bestimmen mindestens eines eines gesamten Drucks, $p_t$, eines statischen Drucks, $p_s$, eines Anstellwinkels, AOA, und eines Seitengleitwinkels, AOS, für jede der identifizierten Gruppierungen von vier verschiedenen Luftdrücken;

Vergleichen des mindestens einen des bestimmten $p_t$, des $p_s$, des AOA und des AOS für jede der identifizierten Gruppierungen von vier verschiedenen Luftdrücken;

Identifizieren der Gruppierungen von vier verschiedenen Luftdrücken, die den gleichen mindestens einen des bestimmten $p_t$, $p_s$, AOA und AOS aufweisen; und

Bestimmen mindestens eines eines tatsächlichen $p_t$, eines tatsächlichen $p_s$, eines tatsächlichen AOA und eines tatsächlichen AOS basierend auf dem mindestens einen bestimmten $p_t$, $p_s$, AOA und AOS für jede der identifizierten Gruppierungen von vier verschiedenen Luftdrücken, die den gleichen mindestens einen des $p_t$, $p_s$, AOA und AOS aufweisen;

wobei jede der Öffnungen durch mindestens einen Einheitsvektor definiert ist, wobei jedes Paar der Einheitsvektoren eine Differenz definiert und wobei jede der Vektorpaardifferenzen in einer verschiedenen Ebene als die anderen Vektorpaardifferenzen liegt.

2. Verfahren nach Anspruch 1, ferner umfassend:

Identifizieren der Gruppierungen von vier verschiedenen Luftdrücken, die mindestens einen verschiedenen $p_t$, $p_s$, AOA und AOS aufweisen;

Identifizieren mindestens einer Öffnung, die gemeinsam mit den Gruppierungen von vier verschiedenen Luftdrücken assoziiert ist, die den mindestens einen verschiedenen $p_t$, $p_s$, AOA und AOS aufweisen; und

Bestimmen, dass die identifizierte mindestens eine Öffnung nicht funktionsfähig ist.

3. Verfahren nach Anspruch 1, wobei der erste, der zweite, der dritte und der vierte Druck empfangen werden, während das Fahrzeug sich mit einer Überschallgeschwindigkeit bewegt.

4. System zum Bestimmen von Luftdatenparametern für ein Fahrzeug, umfassend:

einen ersten Sensor (312), gekoppelt an eine erste Öffnung (104), die an einer Oberfläche des Fahrzeugs angeordnet ist und funktionsfähig zum Erfassen eines ersten Luftdrucks ist;

einen zweiten Sensor (314), gekoppelt an eine zweite Öffnung (106), die an einer Oberfläche des Fahrzeugs angeordnet ist und funktionsfähig zum Erfassen eines zweiten Luftdrucks ist;

einen dritten Sensor (316), gekoppelt an eine dritte Öffnung (108), die an einer Oberfläche des Fahrzeugs angeordnet ist und funktionsfähig zum Erfassen eines dritten Luftdrucks ist;

einen vierten Sensor (318), gekoppelt an eine vierte Öffnung (110), die an einer Oberfläche des Fahrzeugs angeordnet ist und funktionsfähig zum Erfassen eines vierten Luftdrucks ist;

einen fünften Sensor, gekoppelt an eine fünfte Öffnung (202), die an einer Oberfläche des Fahrzeugs angeordnet ist und funktionsfähig zum Erfassen eines fünften Luftdrucks ist;

einen sechsten Sensor, gekoppelt an eine sechste Öffnung (204), die an einer Oberfläche des Fahrzeugs angeordnet ist und funktionsfähig zum Erfassen eines sechsten Luftdrucks ist; und

ein Verarbeitungssystem (302), funktionsfähig zum:

Identifizieren einer Vielzahl von Gruppierungen von vier verschiedenen Luftdrücken von dem ersten, zweiten, dritten, vierten, fünften und sechsten Luftdruck;

Bestimmen mindestens eines eines gesamten Drucks, $p_t$, eines statischen Drucks, $p_s$, eines Anstellwinkels, AOA, und eines Seitengleitwinkels, AOS, für jede der identifizierten Gruppierungen von vier verschiedenen Luftdrücken;

Vergleichen mindestens eines des bestimmten $p_t$, des $p_s$, des AOA und des AOS für jede der identifizierten Gruppierungen von vier verschiedenen Luftdrücken;

Identifizieren der Gruppierungen von vier verschiedenen Luftdrücken, die den gleichen mindestens einen des bestimmten $p_t$, $p_s$, AOA und AOS aufweisen; und

Bestimmen mindestens eines eines tatsächlichen $p_t$, eines tatsächlichen $p_s$, eines tatsächlichen AOA und eines tatsächlichen AOS aus den bestimmten $p_t$, $p_s$, AOA und AOS für jede der identifizierten Gruppierungen von vier verschiedenen Luftdrücken, die den gleichen mindestens einen des $p_t$, $p_s$, AOA und AOS aufweisen;

wobei jede der Öffnungen durch mindestens einen Einheitsvektor definiert ist, wobei jedes Paar der Einheitsvektoren eine Differenz definiert und wobei jede der Vektorpaardifferenzen in einer verschiedenen Ebene als die anderen Vektorpaardifferenzen liegt.

5. System nach Anspruch 4, wobei das Verarbeitungssystem funktionsfähig ist zum:

Vergleichen mindestens eines des bestimmten $p_t$, des $p_s$, des AOA und des AOS für jede der identifizierten Gruppierungen von vier verschiedenen Luftdrücken;

Identifizieren der Gruppierungen von vier verschiedenen Luftdrücken, die mindestens einen verschiedenen $p_t$, $p_s$, AOA und AOS aufweisen;

Identifizieren mindestens einer Öffnung, die gemeinsam mit den Gruppierungen von vier verschiedenen Luftdrücken assoziiert ist, die den mindestens einen verschiedenen $p_t$, $p_s$, AOA und AOS aufweisen; und Bestimmen, dass die identifizierte mindestens eine Öffnung nicht funktionsfähig ist.

**Revendications**

1. Procédé de détermination de paramètres de données air pour un véhicule, comprenant les étapes suivantes :

réception d'une première pression air depuis un premier orifice (104) situé sur une surface du véhicule ;
réception d'une deuxième pression air depuis un deuxième orifice (106) situé sur la surface du véhicule ;
réception d'une troisième pression air depuis un troisième orifice (108) situé sur la surface du véhicule ;
réception d'une quatrième pression air depuis un quatrième orifice (110) situé sur la surface du véhicule ;
réception d'une cinquième pression air depuis un cinquième orifice (202) situé sur la surface du véhicule ;
réception d'une sixième pression air depuis un sixième orifice (204) situé sur la surface du véhicule ;
identification d'une pluralité de regroupements de quatre pressions air différentes à partir des première, deuxième, troisième, quatrième, cinquième et sixième pressions air ;
détermination d'au moins un élément dans le groupe constitué par une pression totale, $p_t$, une pression statique, $p_s$, un angle d'attaque, AOA, et un angle de dérapage, AOS, pour chacun des regroupements identifiés de quatre pressions air différentes ;
comparaison de l'au moins un élément dans le groupe constitué par la $p_t$ déterminée, la $p_s$, l'AOA et l'AOS pour chacun des regroupements identifiés de quatre pressions air différentes ;
identification des regroupements de quatre pressions air différentes ayant le même au moins un élément dans le groupe constitué par la $p_t$, la $p_s$, l'AOA et l'AOS déterminés ; et
détermination d'au moins un élément dans le groupe constitué par une $p_t$ réelle, une $p_s$ réelle, un AOA réel et un AOS réel en fonction de l'au moins un(e) $p_t$, $p_s$, AOA et AOS déterminés pour chacun des regroupements identifiés de quatre pressions air différentes ayant le même au moins un élément dans le groupe constitué par la $p_t$, la $p_s$, l'AOA et l'AOS ;
chacun des orifices étant défini par au moins un vecteur unitaire, chaque paire des vecteurs unitaires définissant une différence, et chacune des différences de paires de vecteurs étant située dans un plan différent de ceux des autres différences de paires de vecteurs.

2. Procédé selon la revendication 1, comprenant en outre les étapes suivantes :

identification des regroupements de quatre pressions air différentes ayant au moins un(e) $p_t$, $p_s$, AOA et AOS qui est différent(e) ;
identification d'au moins un orifice associé en commun aux regroupements de quatre pressions air différentes ayant l'au moins un(e) $p_t$, $p_s$, AOA et AOS qui est différent(e) ; et
détermination que l'au moins un orifice identifié est inutilisable.

3. Procédé selon la revendication 1, dans lequel les première, deuxième, troisième et quatrième pressions sont reçues alors que le véhicule se déplace à une vitesse supersonique.

4. Système permettant de déterminer des paramètres de données air pour un véhicule, comprenant :

un premier capteur (312) relié à un premier orifice (104) situé sur une surface du véhicule, et utilisable pour capter une première pression air ;
un deuxième capteur (314) relié à un deuxième orifice (106) situé sur la surface du véhicule, et utilisable pour capter une deuxième pression air ;
un troisième capteur (316) relié à un troisième orifice (108) situé sur la surface du véhicule, et utilisable pour capter une troisième pression air ;
un quatrième capteur (318) relié à un quatrième orifice (110) situé sur la surface du véhicule, et utilisable pour capter une quatrième pression air ;
un cinquième capteur relié à un cinquième orifice (202) situé sur la surface du véhicule, et utilisable pour capter une cinquième pression air ;
un sixième capteur relié à un sixième orifice (204) situé sur la surface du véhicule, et utilisable pour capter une sixième pression air ; et
un système processeur (302) utilisable pour :

EP 2 093 575 B1

identifier une pluralité de regroupements de quatre pressions air différentes à partir des première, deuxième, troisième, quatrième, cinquième et sixième pressions air ;
déterminer au moins un élément dans le groupe constitué par une pression totale, $p_t$, une pression statique, $p_s$, un angle d'attaque, AOA, et un angle de dérapage, AOS, pour chacun des regroupements identifiés de quatre pressions air différentes ;
comparer au moins un élément dans le groupe constitué par la $p_t$ déterminée, la $p_s$, l'AOA et l'AOS pour chacun des regroupements identifiés de quatre pressions air différentes ;
identifier les regroupements de quatre pressions air différentes ayant le même au moins un élément dans le groupe constitué par la $p_t$, la $p_s$, l'AOA et l'AOS déterminés ; et
déterminer au moins un élément dans le groupe constitué par une $p_t$ réelle, une $p_s$ réelle, un AOA réel et un AOS réel à partir de la $p_t$, la $p_s$, l'AOA et l'AOS déterminés pour chacun des regroupements identifiés de quatre pressions air différentes ayant le même au moins un élément dans le groupe constitué par la $p_t$, la $p_s$, l'AOA et l'AOS ;
chacun des orifices étant défini par au moins un vecteur unitaire, chaque paire des vecteurs unitaires définissant une différence, et chacune des différences de paires de vecteurs étant située dans un plan différent de ceux des autres différences de paires de vecteurs.

5. Système selon la revendication 4, dans lequel le système processeur est utilisable pour :

comparer au moins un élément dans le groupe constitué par la $p_t$ déterminée, la $p_s$, l'AOA et l'AOS pour chacun des regroupements identifiés de quatre pressions air différentes ;
identifier les regroupements de quatre pressions air différentes ayant au moins un(e) $p_t$, $p_s$, AOA et AOS qui est différent(e) ;
identifier au moins un orifice associé en commun aux regroupements de quatre pressions air différentes ayant l'au moins un(e) $p_t$, $p_s$, AOA et AOS qui est différent(e) ; et
détermination que l'au moins un orifice identifié est inutilisable.

FIG. 1

FIG. 2

*FIG. 3*

EP 2 093 575 B1

**FIG. 4**

**FIG. 5**

**EP 2 093 575 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5616861 A
- EP 1255118 A
- US 2006225496 A